# EUROPÄISCHE PATENTSCHRIFT

(11) **EP 1 109 867 B1**
(45) Veröffentlichungstag und Bekanntmachung des Hinweises auf die Patenterteilung: **02.05.2002**
(21) Anmeldenummer: 99931135.0
(22) Anmeldetag: 22.06.1999
(51) Int. Cl.: C09C 3/06, C09C 1/00, C09C 1/02, C09C 1/04, C09D 5/08, C25D 13/02

(54) **ANORGANISCHE KORROSIONSSCHUTZ-PIGMENTE UND VERFAHREN ZU DEREN HERSTELLUNG**
INORGANIC ANTI-CORROSIVE PIGMENTS AND METHOD FOR THE PRODUCTION THEREOF
PIGMENTS INORGANIQUES DE PROTECTION ANTICORROSION ET LEUR PROCEDE DE PRODUCTION

(30) Priorität: 21.08.1998 DE 19837956; 22.02.1999 DE 19907287
(43) Veröffentlichungstag der Anmeldung: 27.06.2001
(73) Patentinhaber: Sachtleben Chemie GmbH, 47198 Duisburg (DE)
(72) Erfinder: RENTSCHLER, Thomas, D-47802 Krefeld (DE)
(74) Vertreter: Uppena, Franz, Dr.
(86) Internationale Anmeldenummer: EP9904315
(87) Internationale Veröffentlichungsnummer: WO0011089

(56) Entgegenhaltungen:
- EP-A- 0 450 805
- DE-A- 1 962 492
- FR-A- 2 333 033
- US-A- 4 479 891
- US-A- 5 123 965
- CHEMICAL ABSTRACTS, vol. 108, no. 12, 21. März 1988 (1988-03-21) Columbus, Ohio, US; abstract no. 96259, XP002096283 & CS 235 887 B (NEDOROST,MIROSLAV) 1. März 1987 (1987-03-01)

## Beschreibung

Die Erfindung bezieht sich auf anorganische Korrosionsschutz-Pigmente, bestehend aus oberflächenbeschichteten feinteiligen Festkörpern mit einer Korngröße von 0,1 bis 75 µm, vorzugsweise 0,2 bis 10 µm, ein Verfahren zu deren Herstellung und deren Verwendung.

Anorganische Füllstoffe sind in feinteiliger Form vorligende Festkörper, die sich von anorganische Weißpigmenten durch ihre Brechzahl unterscheiden. Füllstoffe haben in der Regel Brechzahlen < 1.7 (gegen Vakuum), Weißpigmente größere. Ein weiteres Unterscheidungsmerkmal ist darin zu sehen, daß diese Materialien der Füllung dienen, also in der jeweiligen Mischung einen Hauptbestandteil darstellen. Pigmente werden dagegen überwiegend in geringen Mengen verwendet. Beide Abgrenzungskriterien sind jedoch nicht exakt; denn einerseits kann auch ein Füllstoff mit einer Brechzahl von < 1.7 in einer geeignet gewählten Matrix ein gewisses Deckvermögen, also eine eigentlich pigmentspezifische Eigenschaft besitzen, andererseits werden auch bestimmte Füllstoffe nur in kleinen Mengen eingesetzt. Die Grenze ist also fließend.

Füllstoffe haben zwei Aufgaben; einmal sollen sie im klassischen Sinne ein Produkt verbilligen und dafür sorgen, daß es im Vergleich zu ungefüllten Produkten verbesserte bzw. zusätzliche neue Eigenschaften aufweist, zum anderen soll die Verwendung von Füllstoffen häufig die Herstellung von Produkten erleichtern.

Neben der kostensenkenden Wirkung haben Füllstoffe auch noch Einfluß auf die Rheologie, d.h. Verdickung und ggf. Thixotropierung durch gezielte Einstellung einer zeitabhängigen Strukturviskosität, z.B. durch Talk, Wollastonit und Kaolin. Allgemein soll das Fließverhalten bei Lacken, Beschichtungen, Druckfarben, flüssigen Kunststoffen und Dichtungsmassen beeinflußt werden. Durch Füllstoffe werden auch die optischen Eigenschaften beeinflußt, z.B. werden Weißgrad und Deckvermögen bei Ersatz des echten Weißpigments durch u.a. synthetische Silikate in Dispersionsfarben verbessert. Durch die Verwendung von Glimmer-, Eisenglimmer- und Bariumsulfat-Füllstoffen läßt sich der Korrosionsschutz von Anstrichen und Beschichtungen gegen Witterungseinflüsse und Chemikalien verbessern.

In der CZ-B-235 851 sind u.a. Füllstoffe vorgesehen, die mit einer Schicht aus Mn₃(PO₄)₂ überzogen sind und Lacken zum Zwecke des Korrosionsschutzes zugemischt werden. Die JP-B-04 183 756 offenbart ein aus Serizitflocken bestehendes Pigment, dessen Teilchen mit einer Schicht aus Zinkoxid überzogen sind. Die Pigmentteilchen werden in Beschichtungen für Stahlbleche zum Schutz gegen Korrosion eingebracht. Die DE-C-2 200 654 befaßt sich mit Füllstoffen, wie Talk, Siliziumdioxid, Titandioxid oder Mischungen davon mit auf deren Partikeloberflächen abgeschiedenen Metallmolybdatüberzug. Diese Partikel sollen als korrosionsinhibierender Zusatz in Anstrichmitteln eingesetzt werden. Gemäß der US-A-4 017 315 kann ein solcher Überzug zusätzlich noch Metallphosphat enthalten. Die EP-A-0 505 086 beschreibt ein Verfahren, mit dem auf lamellen- und flockenförmigen Partikeln von synthetischem Eisenoxidglimmer Zinkphosphat abgeschieden wird und die zum Korrosionsschutz in Beschichtungen von Stahlbauteilen eingebracht werden. In der DE-C-2 245 995 wird ein Füllstoff aus einem inerten Kern, bestehend aus Wollastonit, Talk, Glimmer, Nephelin-Syenit und/oder Feldspat vorgeschlagen, dessen Partikel an ihrer Oberfläche mit Calciumphosphat,-phosphit und/oder -borat überzogen sind. Dieser Füllstoff soll Anstrichen und Beschichtungen eine verbesserte Dauerfestigkeit und Härte, sowie korrosionsinhibierende Wirkung und taninabsorbierende Eigenschaften verleihen.

Es ist das ständige Bestreben der Fachwelt, Anstriche, Beschichtungen, Druckfarben oder dergl. gegen die Einflüsse von Atmosphärilien und Chemikalien beständig zu machen.

Es ist daher die Aufgabe vorliegender Erfindung, Korrosionsschutz-Pigmente der eingangs beschriebenen Art bereitzustellen, die neben ihren Einflüssen auf das rheologische Verhalten sowie auf die optischen und mechanischen Eigenschaften eine deutlich verbesserte korrosionsinhibierende Wirkung auf die Beständigkeit von Anstrichen und Beschichtungen ausüben.

Die Lösung dieser Aufgabe erfolgt durch anorganische Korrosionsschutz-Pigmente mit den in Anspruch 1 angegebenen Merkmalen.

Die Patentansprüche 2 bis 6 geben vorzugsweise Ausbildungen der Korngröße und der Oberflächenbeschichtung der Festkörper wieder.

In den Ansprüchen 7 bis 11 sind die als besonders geeigneten Festkörper der Korrosiosschutz-Pigmente angegeben.

Die Ansprüche 12 bis 22 betreffen die Herstellung der erfindungsgemäß aufgebauten Korrosionsschutz-Pigmente.

Die Ansprüche 23 und 24 betreffen die Anwendung der Korrosionsschutz-Pigmente.

Die erfindungsgemäß ausgebildeten anorganischen Korrosionsschutz-Pigmente bewirken insbesondere eine deutliche Erhöhung der Widerstandsfähigkeit von Lacken, Beschichtungen, Kunststoffen gegen Witterungseinflüsse und Chemikalien.

Die Herstellung der erfindungsgemäßen Korrosionsschutz-Pigmente ist nachfolgend näher am Beispiel eines Bariumsulfat-Trägermaterials erläutert. Bei dem verwendeten BaSO4 kann es sich sowohl um natürlichen Schwerspat als auch um frisch gefälltes, synthetisches BaSO4 unterschiedlicher Teilchengröße und Morphologie handeln.

Eine wäßrige BaSO4-Suspension mit einem Feststoffgehalt von 21 % BaSO4 wird unter ständigem Rühren auf eine Temperatur von 80°C erhitzt. Die pH-Werte der einzelnen Fällungsstufen im Bereich von 4 bis 8 werden während der Nachbehandlung je nach Bedarf mittels NaOH beziehungsweise H₂SO₄ eingestellt und konstant gehalten. Die einzelnen Komponenten - Phosphorsäure und Mangansulfatlösung sowie im Anschluß Natriumaluminatlösung - werden in einer mehrstufigen Fällung stöchiometrisch unter Rühren und Halten von pH und Temperatur auf die Oberfläche des Trägermaterials, in diesem Falle auf BaSO₄, aufgefällt. Nach einer Reifezeit von ca. 2 Stunden unter ständigem Rühren bei vorgegebener Temperatur wird das entstandene Produkt abfiltriert, mit deionisiertem Wasser gewaschen, getrocknet und im Falle möglichst feinteiligen Materials anschließend strahlgemanlen.

Die Strahlmahlung entfällt bei der Verwendung plättchenförmiger Trägermaterialien. Das erhaltene Produkt kann einem zusätzlichen, optionalen Glühprozeß unterworfen werden.

Mittels dieser Verfahrensmaßnahmen können die erfindungsgemäßen Korrosionsschutz-Pigmente hergestellt werden, und zwar unter der Auswahl gewünschter Trägermaterialien und deren Feinteiligkeit beziehungsweise Morphologie in Kombination mit unterschiedlichen, aktiv korrosionsschützenden Oberflächenbeschichtungen.

Diese Korrosionsschutz-Pigmente werden in unterschiedlichen Pigmentvolumenkonzentrationen (PVK), d. h. dem Verhältnis des Gesamtvolumens des Korrosionsschutz-Pigmentes in einem Produkt zum Gesamtvolumen aller nichtflüchtigen Anteile, in Lackrezepturen eingebracht. Nachfolgend ist ein Beispiel eines lösungsmittelbasierenden Alkyd-Beschichtungssystems (Angaben in Gewichtsprozent als Feststoff gerechnet) wiedergegeben:

Alkydharz (kurzölig) 20 %, Phenolharz 5 %, TiO₂ 8 %, Korrosionsschutz-Pigment 10 %, Schwerspat 6 %, Talkum 8 %, Hautverhinderungsmittel (Oxin) 0,4 %, Bentone 1 %, Sikkativ 0,06 %, Rest zu 100 %: Lösungsmittel Xylol, Glykole, Butylacetat. Die Anteile der Pigmente und Füllstoffe können entsprechend den Anforderungen variiert werden.

Die Komponenten werden hierbei mit einem Dissolver vermischt beziehungsweise vordispergiert und anschließend über eine Permühle dispergiert. Mit diesem Ansatz können beispielsweise anwendungstechnische Salzsprühnebelprüfungen gemäß DIN 51167 durchgeführt werden, indem das Beschichtungssystem auf entfettete Bleche von 100 x 150 x 1 mm aufgeschleudert, getrocknet und anschließend in spezielle Salzsprühnebelkammern eingebracht wird.

## Patentansprüche

1. Anorganische Korrosionsschutz-Pigmente, bestehend aus oberflächenbeschichteten Festkörpern mit einer Korngröße von 0,1 bis 75 µm, **dadurch gekennzeichnet, daß** auf die Festkörper 1. Mn₃(PO₄)₂ und 2. Aluminiumoxide und/oder Aluminiumhydroxide aufgefällt sind.

2. Anorganische Korrosionsschutz-Pigmente nach Anspruch 1, **dadurch gekennzeichnet, daß** die oberflächenbeschichteten Festkörper eine Korngröße von 0,2 bis 10 µm haben.

3. Korrosionsschutz-Pigmente nach Anspruch 1 oder 2, **dadurch gekennzeichnet, daß** Mn₃(PO₄)₃ ganz oder teilweise durch Zn₃(PO₄)₂ ersetzt ist.

4. Korrosionsschutz-Pigmente nach einem der Ansprüche 1 bis 3, **dadurch gekennzeichnet, daß** auf die Festkörper zusätzlich Phosphate und/oder Oxide des Cers und/oder Hydroxide des Zinns einzeln oder zu mehreren aufgefällt sind.

5. Korrosionsschutz-Pigmente nach einem der Ansprüche 1 bis 4, **dadurch gekennzeichnet, daß** die Anteile der Substanz, gewichtsbezogen auf den Festkörper,
0,1 bis 15 % Mangan
0,1 bis 15 % Zink
0,1 bis 15 % Al₂O₃
0,1 bis 5 % CeO₂
0,1 bis 10 % SnO₂
betragen.

6. Korrosionsschutz-Pigmente nach Anspruch 5, **dadurch gekennzeichnet, daß** die Anteile der Substanzen, gewichtsbezogen auf den Feststoff
0,1 bis 3 % Mangan
0,1 bis 6 % Zink
0,1 bis 6 % Al₂O₃
0,1 bis 2,5 % CeO₂
0,1 bis 5 % SnO₂
betragen.

7. Korrosionsschutz-Pigmente nach einem der Ansprüche 1 bis 6, **dadurch gekennzeichnet, daß** die Festkörper natürliche Silikatfüllstoffe, insbesondere Feldspat Zeolithe, Talk, Pyrophyllit, Kaolin, Glimmer, Muskorit, Bentonit, Wollastonit und Tremolit sind.

8. Korrosionsschutz-Pigmente nach einem der Ansprüche 1 bis 6, **dadurch gekennzeichnet, daß** die Festkörper Bariumsulfatfüllstoffe, insbesondere Schwerspat und Blanc fixe, sind.

9. Korrosionsschutz-Pigmente nach einem der Ansprüche 1 bis 6, **dadurch gekennzeichnet, daß** die Festkörper Zinkpigmente, insbesondere Zink, Zinkoxid, Zinksulfid und Lithopone sind.

10. Korrosionsschutz-Pigmente nach einem der Ansprüche 1 bis 6, **dadurch gekennzeichnet, daß** die Festkörper Eisenglimmer sind.

11. Korrosionsschutz-Pigmente nach einem der Ansprüche 1 bis 6, **dadurch gekennzeichnet, daß** die Festkörper Aluminiumoxid sind.

12. Verfahren zur Herstellung der Korrosionsschutz-Pigmente nach einem der Ansprüche 1 bis 11, **dadurch gekennzeichnet, daß** die Auffällung auf die Oberfläche der Festkörper aus einer wässrigen Lösung erfolgt, in der Phosphorverbindungen und lösliche, anorganische und/oder organische Metallverbindungen 1. des Aluminiums und 2. des Mangans und/oder des Zinks und gegebenenfalls 3. Cers und/oder des Zinns enthalten sind, wobei die Auffällung in mehreren Stufen, in denen die einzelnen Komponenten zugegeben werden, erfolgt.

13. Verfahren nach Anspruch 12, **dadurch gekennzeichnet, daß** die Auffällung der Aluminiumoxide und/oder Aluminiumhydroxide aus einer wässrigen Lösung erfolgt, in der als Aluminiumverbindungen Alkalialuminate, Aluminiumsulfate, - hydroxide und -halogenide einzeln oder zu mehreren eingesetzt werden.

14. Verfahren nach einem der Ansprüche 12 und 13, **dadurch gekennzeichnet, daß** als Mangan-, Zink-, Zinn- und Cer-Nitrate, -Carbonate, -Hydroxide, -Sulfate, -Halogenide, -Acetate, -Oxalate, Alkalistannate und vergleichbare organische Salze einzeln oder zu mehreren eingesetzt werden.

15. Verfahren nach einem der Ansprüche 12 bis 14, **dadurch gekennzeichnet, daß** als Phosphorverbindung eine oder mehrere der Verbindungen Phosphorsäure, Phosphorpentoxid, Alkaliphosphat, Alkalihydrogenphosphat, Dihydrogenphosphat, Pyrophosphat, Triphosphat und Polyphosphat eingesetzt werden.

16. Verfahren nach einem der Ansprüche 12 bis 15, **dadurch gekennzeichnet, daß** die aus natürlichen Silikat- und Bariumsulfatfüllstoffen bestehenden Festkörper vor der Oberflächenbeschichtung gemahlen werden.

17. Verfahren nach einem der Ansprüche 12 bis 16, **dadurch gekennzeichnet, daß** die Auffällung der Oberflächenbeschichtung kontinuierlich oder diskontinuierlich durchgeführt wird.

18. Verfahren nach einem der Ansprüche 12 bis 17, **dadurch gekennzeichnet, daß** die Auffällung in mehreren Stufen hintereinander oder durch simultene Zugabe mehrerer Komponenten erfolgt.

19. Verfahren nach einem der Ansprüche 12 bis 18, **dadurch gekennzeichnet, daß** die Auffällung der Aluminiumverbindungen zum Schluß erfolgt.

20. Verfahren zur Behandlung der nach einem oder mehreren der Ansprüche 12 bis 19 hergestellten Korrosionsschutz-Pigmente, **dadurch gekennzeichnet, daß** diese nach der Oberflächenbeschichtung einer thermischen Nachbehandlung bei Temperaturen von 400 bis 1000°C unterzogen werden.

21. Verfahren nach Anspruch 20, **dadurch gekennzeichnet, daß** die Temperaturen der thermischen Nachbehandlung bei 600 bis 900°C liegen.

22. Verfahren zur Behandlung der nach einem oder mehrere der Ansprüche 12 bis 21 hergestellten Korrosionsschutz-Pigmente, **dadurch gekennzeichnet, daß** diese am Ende der Herstellung mit Stift- oder Strahlmühlen aufgemahlen werden.

23. Verwendung der nach den Ansprüchen 12 bis 22 hergestellten Korrosionsschutz-Pigmente, insbesondere für Grundierung, Basislackierung, Decklackierung und dergleichen auf Basis von wäßrigen oder organischen Lösungsmitteln aufweisenden Bindemittelsystemen, z.B. im Automobilbau, im Eisenbahnbau, Wasserfahrzeugbau mit Flugzeugbau sowie für den Bautenschutz.

24. Verwendung der nach den Ansprüchen 12 bis 22 hergestellten Korrosionsschutz-Pigmente für Beschichtungen, insbesondere für Elektrophoreselacke zur kathodischen oder anodischen Tauchlackierung.

## Claims

1. Inorganic anti-corrosive pigments, consisting of surface-coated solids having a grain size of 0.1 to 75 µm, **characterised in that** firstly Mn₃(PO₄)₂ and secondly aluminium oxides and/or aluminium hydroxides are precipitated onto the solids.

2. Inorganic anti-corrosive pigments according to claim 1, **characterised in that** the surface-coated solids have a grain size of 0.2 to 10 µm.

3. Anti-corrosive pigments according to claim 1 or 2, **characterised in that** Mn₃(PO₄)₂ is replaced totally or partly by Zn₃(PO₄)₂.

4. Anti-corrosive pigments according to one of claims 1 to 3, **characterised in that**, in addition, phosphates and/or oxides of cerium and/or hydroxides of tin are precipitated individually or severally onto the solids.

5. Anti-corrosive pigments according to one of claims 1 to 4, **characterised in that** the proportions of the substance, weight-related to the solid, amount to
0.1 to 15 % manganese
0.1 to 15 % zinc
0.1 to 15 % Al₂O₃
0.1 to 5 % CeO₂
0.1 to 10 % SnO₂.

6. Anti-corrosive pigments according to claim 5, **characterised in that** the proportions of the substances, weight-related to the solid, amount to
0.1 to 3 % manganese
0.1 to 6 % zinc
0.1 to 6 % Al₂O₃
0.1 to 2.5 % CeO₂
0.1 to 5 % SnO₂.

7. Anti-corrosive pigments according to one of claims 1 to 6, **characterised in that** the solids are natural silicate fillers, in particular feldspar zeolites, talc, pyrophyllite, kaolin, mica, muscovite, bentonite, wollastonite and tremolite.

8. Anti-corrosive pigments according to one of claims 1 to 6, **characterised in that** the solids are barium sulphate fillers, in particular heavy spar and blanc fixe.

9. Anti-corrosive pigments according to one of claims 1 to 6, **characterised in that** the solids are zinc pigments, in particular zinc, zinc oxide, zinc sulphide and lithopones.

10. Anti-corrosive pigments according to one of claims 1 to 6, **characterised in that** the solids are iron mica.

11. Anti-corrosive pigments according to one of claims 1 to 6, **characterised in that** the solids are aluminium oxide.

12. Method for preparing anti-corrosive pigments according to one of claims 1 to 11, **characterised in that** the precipitation onto the surface of the solids is effected from an aqueous solution, in which are contained phosphorus compounds and soluble, inorganic and/or organic metal compounds firstly of aluminium and secondly of manganese and/or of zinc and, if applicable, thirdly of cerium and/or of tin, with the precipitation being effected in a plurality of stages in which the individual constituents are added.

13. Method according to claim 12, **characterised in that** the precipitation of the aluminium oxides and/or aluminium hydroxides is effected from an aqueous solution in which alkali aluminates, aluminium sulphates, aluminium hydroxides and aluminium halides are used individually or severally as aluminium compounds.

14. Method according to one of claims 12 and 13, **characterised in that** alkali stannates and comparable organic salts are used individually or severally as manganese-, zinc-, tin- and cerium-nitrates, carbonates, hydroxides, sulphates, halides, acetates, oxalates.

15. Method according to one of claims 12 to 14, **characterised in that** one or more of the compounds phosphoric acid, phosphorus pentoxide, alkali phosphate, alkali hydrogen phosphate, dihydrogen phosphate, pyrophosphate, triphosphate and polyphosphate are used as a phosphorus compound.

16. Method according to one of claims 12 to 15, **characterised in that** the solids that consist of natural silicate- and barium-sulphate fillers are ground before surface-coating is carried out.

17. Method according to one of claims 12 to 16, **characterised in that** the precipitation of the surface-coating is carried out continuously or discontinuously.

18. Method according to one of claims 12 to 17, **characterised in that** the precipitation is effected in a plurality of stages in succession or by means of simultaneous addition of a plurality of constituents.

19. Method according to one of claims 12 to 18, **characterised in that** the precipitation of the aluminium compounds is effected at the end.

20. Method for the treatment of the anti-corrosive pigments that are prepared according to one or more of claims 12 to 19, **characterised in that**, after the surface-coating has been carried out, the pigments are subjected to thermal after-treatment at temperatures of 400 to 1000°C.

21. Method according to claim 20, **characterised in that** the temperatures of the thermal after-treatment are at 600 to 900°C.

22. Method for the treatment of the anti-corrosive pigments that are prepared according to one or more of claims 12 to 21, **characterised in that** the pigments are ground up at the end of the preparation by means of pinned disk mills or jet mills.

23. Use of the anti-corrosive pigments prepared according to claims 12 to 22, using a base of aqueous or organic binding-agent systems that have solvents, in particular for priming, base-lacquering, finish-lacquering and the like, in, for example, automobile construction, railway construction, watercraft construction and aircraft construction and also for building protection.

24. Use of the anti-corrosive pigments prepared according to claims 12 to 22 for coatings, in particular for electrophoretic lacquers for cathodic or anodic dip-lacquering.

## Revendications

1. Pigments minéraux anti-corrosion, constitués de particules solides enrobés ayant une taille de particules comprise entre 0,1 et 0,75 µm, **caractérisés par le fait qu'**ils portent à leur surface
(1) du Mn₃(PO₄)₂ et,
(2) des oxydes d'aluminim et/ou hydroxydes d'aluminium, déposés par précipitation.

2. Pigments minéraux anti-corrosion selon la revendication 1, **caractérisés par le fait que** les particules solides enrobés ont une taille de particules comprise entre 0,2 et 10 µm.

3. Pigments minéraux anti-corrosion selon la revendication 1 ou 2, **caractérisés par le fait que** le Mn₃(PO₄)₂ est complètement ou partiellement remplacé par Zn₃(PO₄)₂.

4. Pigments minéraux anti-corrosion selon l'une des revendications 1 à 3, **caractérisés par le fait que** les particules solides portent en surface en outre des phosphates et/ou oxydes de cérium et/ou hydroxydes d'étain, seuls ou sous forme de mélange, déposés par précipitation.

5. Pigments minéraux anti-corrosion selon l'une des revendications 1 à 4, **caractérisés par le fait que** les proportions des substances, rapportées aupoids des particules solides, sont :
de 0,1 à 15 % pour le manganèse,
de 0,1 à 15 % pour le zinc,
de 0,1 à 15 % pour l'Al₂O₃,
de 0,1 à 5 % pour le CeO₂,
de 0,1 à 10 % pour le SnO₂.

6. Pigments anti-corrosion selon la revendication 5, **caractérisés par le fait que** les proportions des substances, rapportées au poids des particules solides, sont :
de 0,1 à 3 % pour le manganèse,
de 0,1 à 6 % pour le zinc,
de 0,1 à 6 % pour l'Al₂O₃,
de 0,1 à 2,5 % pour le CeO₂,
de 0,1 à 5 % pour le SnO₂.

7. Pigments anti-corrosion selon l'une des revendications 1 à 6, **caractérisés par le fait que** les particules solides sont des charges en silicate naturel, en particulier du feldspath, des zéolithes, du talc, de la pyrophillite, du kaolin, du mica, de la muscovite, de la bentonite, de la wollastonite et de la trémolite.

8. Pigments anti-corrosion selon l'une des revendications 1 à 6, **caractérisés par le fait que** les particules solides sont des charges à base de sulfate de baryum, en particulier à base de barytine ou de blanc fixe.

9. Pigments anti-corrosion selon l'une des revendications 1 à 6, **caractérisés par le fait que** les particules solides sont des pigments à base de zinc, en particulier du zinc, de l'oxyde de zinc, du sulfure de zinc et des lithopones.

10. Pigments anti-corrosion selon l'une des revendications 1 à 6, **caractérisés par le fait que** les particules solides sont de l'oxyde de fer micacé.

11. Pigments anti-corrosion selon l'une des revendications 1 à 6, **caractérisés par le fait que** les particules solides sont en oxyde d'aluminium.

12. Procédé de préparation des pigments anti-corrosion selon l'une des revendications 1 à 11, **caractérisé par le fait que** le dépôt par précipitation des revêtements à la surface des particules solides se fait à partir d'une solution aqueuse contenant des composés du phosphore et des composés solubles, organiques et/ou minéraux, (1) d'aluminium et (2) de manganèse et/ou de zinc, et éventuellement (3) de cérium et/ou d'étain, la précipitation se faisant en plusieurs étapes dans lesquelles on ajoute les différents composés.

13. Procédé selon la revendication 12, **caractérisé par le fait que** la précipitation des oxydes d'aluminium et/ou hydroxydes d'aluminium se fait à partir d'une solution aqueuse contenant, en tant que composés d'aluminium, des aluminates de métaux alcalins, des sulfates d'aluminium, des hydroxydes d'aluminium et des halogénures d'aluminium, seuls ou sous forme de mélange.

14. Procédé selon l'une des revendications 12 et 13, **caractérisé par le fait que** l'on utilise, en tant que composés de manganèse, de zinc, d'étain et de cérium, des nitrates, des carbonates, des hydroxydes, des sulfates, des halogénures, des acétates, des oxalates, des stannates alcalins, et des sels organiques similaires, seuls ou sous forme de mélange.

15. Procédé selon une des revendications 12 à 14, **caractérisé par le fait que** l'on utilise, comme composé du phosphore, un ou plusieurs composés choisis parmi l'acide phosphorique, le pentoxyde de phosphore, les phosphates de métaux alcalins, l'hydrogénophosphate de métaux alcalins, le dihydrogénophosphate, le pyrophosphate, le triphosphate et les polyphosphates.

16. Procédé selon l'une des revendications 12 à 15, **caractérisé par le fait que** les particules solides constituées de charges en silicates naturels ou en sulfate de baryum sont broyés avant de recevoir le revêtement de surface.

17. Procédé selon l'une des revendications 12 à 16, **caractérisé par le fait que** le dépôt du revêtement par précipitation se fait en mode continu ou discontinu.

18. Procédé selon l'une des revendications 12 à 17, **caractérisé par le fait que** le dépôt par précipitation se fait en plusieurs étapes ou en une seule étape par addition de plusieurs composants.

19. Procédé selon l'une des revendications 12 à 18, **caractérisé par le fait que** le dépôt par précipitation des composés d'aluminium se fait à la fin.

20. Procédé de traitement des pigments anti-corrosion préparés selon un procédé selon l'une ou plusieurs des revendications 12 à 19, **caractérisé par le fait que** les pigments sont soumis, après dépôt du revêtement de surface, à un post-traitement thermique à des températures comprises entre 400 et 1000 °C.

21. Procédé selon la revendication 20, **caractérisé par le fait que** le post-traitement thermique se fait à des températures comprises entre 600 et 900 °C.

22. Procédé de traitement des pigments anti-corrosion préparés selon l'une ou plusieurs des revendications 12 à 21, **caractérisé par le fait que** les pigments sont broyés à la fin du procédé de préparation au moyen d'un broyer à jet ou à broches.

23. Utilisation des pigments anti-corrosion préparés selon l'une des revendications 12 à 22, en particulier pour des peintures et vernis de base, des vernis couvrants etc. à base de systèmes de liants contenant des solvants aqueux ou organiques, par exemple dans le domaine de la construction automobile, de la construction des chemins de fer, de la construction navale et aéronautique ainsi que pour la protection de bâtiments.

24. Utilisation des pigments anti-corrosion préparés selon l'une des revendications 12 à 22, en particulier dans des vernis électrophorétiques pour le vernissage par immersion cathodique ou anodique.
